Europäisches Patentamt

European Patent Office

Office européen des brevets

(11) Veröffentlichungsnummer: **0 339 206**
A1

## (12) EUROPÄISCHE PATENTANMELDUNG

(21) Anmeldenummer: 89103371.4

(22) Anmeldetag: 25.02.89

(51) Int. Cl.⁴: **F28F 21/06 , F28F 1/32 , B29C 65/02**

(30) Priorität: 28.04.88 DE 3814306

(43) Veröffentlichungstag der Anmeldung:
02.11.89 Patentblatt 89/44

(84) Benannte Vertragsstaaten:
AT BE CH DE ES FR GB GR IT LI LU NL SE

(71) Anmelder: HAPPEL GmbH & Co.
Südstrasse
D-4690 Herne 2(DE)

(72) Erfinder: Rudolph, Karl-Heinz
Josefinenstrasse 236 B
D-4630 Bochum 1(DE)

(74) Vertreter: Patentanwaltsbüro Cohausz &
Florack
Postfach 14 01 20 Schumannstrasse 97
D-4000 Düsseldorf 1(DE)

(54) Rippenrohrelement für Wärmetauscher und Verfahren zu seiner Herstellung.

(57) Die Erfindung betrifft ein Element zum Übertragen von Wärme bei Wärmetauschern mit einem Rohr, an dessen Außenseite Rippen oder Lamellen aus Metall vorstehen, wobei die Rippen oder Lamellen (1) zumindest auf einer Seite mit Kunststoff überzogen sind, und daß das Rohr (3) aus Kunststoff besteht oder außen eine Kunststoffbeschichtung trägt, und der Kunststoff (7) der Rippen oder Lamellen (1) mit dem des Rohres (3) verbunden ist.

FIG.3

EP 0 339 206 A1

## Rippenrohrelement für Wärmetauscher und Verfahren zu seiner Herstellung

Die Erfindung bezieht sich auf ein Element zum Übertragen von Wärme bei Wärmetauschern mit einem Rohr, an dessen Außenseite Rippen oder Lamellen aus Metall vorstehen. Ferner betrifft die Erfindung eine Verfahren zum Herstellen eines solchen Elementes.

Wärmetauscher dieser Bauweise werden zum Erwärmen und/oder Abkühlen von Luft oder sonstigen gasförmigen Medien verwandt, unter anderem zur Motorkühlung und/oder Beheizung des Fahrgastraumes von Kraftfahrzeugen, die mit flüssigkeitsgekühlten Verbrennungsmotoren ausgerüstet sind. Zum Herstellen dieser Wärmetauscher ist es bekannt aus einem Metallband, insbesondere einem Aluminiumband oder Kupferband in einer Dicke von 0,1 - 0,3 mm entsprechende Lamellen zu fertigen. Danach werden Rohre vorzugsweise aus Kupfer oder Aluminium in Öffnungen der Lamellen eingeschoben. Mittels eines geeigneten Aufweitvorgangs, mechanisch über Dorn oder hydraulisch, wird dann das Rohr überdehnt. Dadurch entsteht ein fester Sitz zwischen Rohr und Lamelle, so wie es für die spätere Funktion der Wärmeübertragung notwendig ist. Es müssen somit teure Kupfer- oder Alurohre verwendet werden. Auch haben Wärmetauscher dieser Art ein hohes Gewicht. Dies ist besonders nachteilig beim Einsatz in Kraftfahrzeugen. Der Einsatz von Kunststoffrohren scheiterte bisher an dem erforderlichen festen Kontakt zwischen Rohr und Lamelle, da sich Kunststoffrohre nicht in der vorbezeichneten Weise aufweiten lassen.

Der Erfindung liegt die Aufgabe zugrunde, Rippenrohrelemente für Wärmetauscher zu schaffen, die bei geringem Gewicht einfach in der Herstellung sind.

Diese Aufgabe wird erfindungsgemäß dadurch gelöst, daß die Rippen oder Lamellen zumindest auf einer Seite mit Kunststoff überzogen sind, daß das Rohr aus Kunststoff besteht oder außen eine Kunststoffbeschichtung trägt, und der Kunststoff der Rippen oder Lamellen mit dem des Rohres verbunden ist.

Durch das Überziehen der Lamellen, insbesondere auf einer Seite durch eine Kunststoffschicht wird es auf besonders einfache Weise möglich die Lamellen mit den Rohren fest zu verbinden, da hierfür das Kunststoffmaterial von Lamellen und Rohren genutzt werden kann. Dennoch bleiben die hierdurch hergestellten Rippenrohrelemente in hohem Maße wärmeleitfähig und sie besitzen ein geringes Gewicht. Dies ist insbesondere im Kraftfahrzeugbau von höchstem Vorteil.

Eine besonders einfache Herstellung ist dann erreichbar, wenn der Kunststoff der Rippen oder Lamellen mit dem des Rohres verschmolzen oder verklebt ist. Der Halt der Teile aneinander wird auch dadurch wesentlich verbessert, wenn die für die Rohre vorgesehenen Öffnungen der Rippen oder Lamellen Umbördelungen oder Stutzen oder Buchsen für Erweiterungen der Ränder aufweisen, die auf der dem Rohr zugewandten Seite die Kunststoffbeschichtung tragen.

Ein besonders einfaches und besonders vorteilhaft durchführbares Verfahren zum Herstellen solcher Rippenrohrelemente wird nach dem Vorbild gemäß DE-OS 3543283 dann erreicht, wenn die Rippen oder Lamellen und die Rohre aufeinander gesteckt werden und darauf durch Zufuhr von Energie die Kunststoffbeschichtungen an ihren Berührungsstellen miteinander verbunden werden. Hierbei kann vorzugsweise die Energie durch Mikrowellen oder einen Durchlaufofen zugeführt werden. Besonders vorteilhaft ist es, wenn die Rohre mit einer Flüssigkeit, insbesondere Wasser gefüllt und die Flüssigkeit duch Mikrowellen erhitzt wird.

Ausführungsbeispiele der Erfindung sind in Zeichnungen dargestellt und werden im folgenden als Vorrichtung und Verfahren beschrieben. Es zeigen

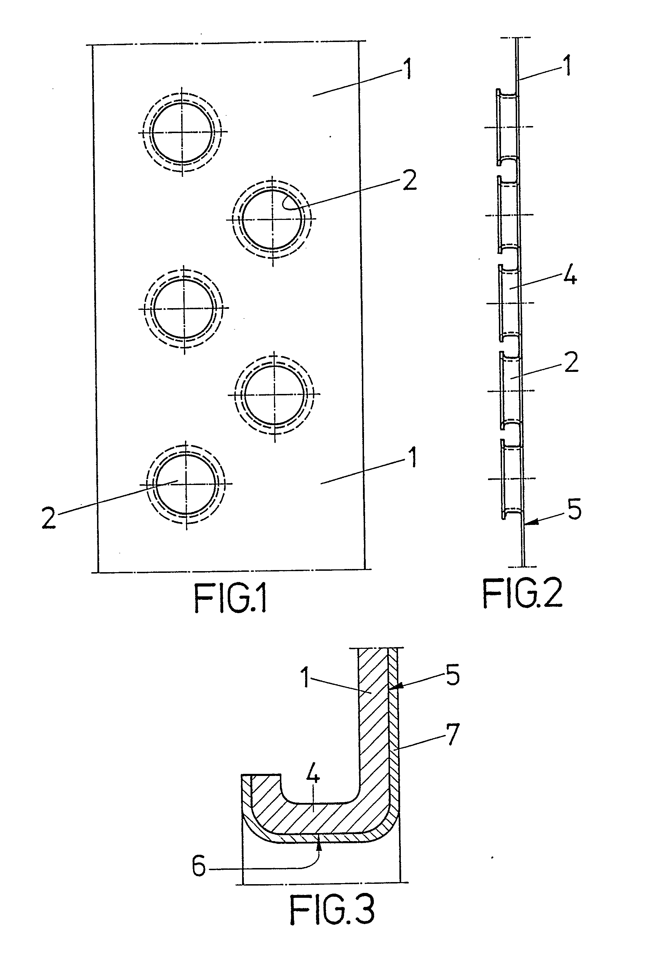

Figur 1 eine Seitenansicht einer Lamelle mit umgebördelten Öffnungen,

Figur 2 eine Ansicht nach II in Figur 1,

Figur 3 den Ausschnitt III in Figur 2,

Figur 4 einen Längsschnitt durch ein Rohr mit mehreren befestigten Lamellen im Ausschnitt,

Figur 5 bis 7 verschiedene Querschnitte von Rohren.

Lamellen 1 aus einem Blech, insbesondere einem Aluminium-oder Kupferblech werden in regelmäßigen Abständen mit Öffnungen 2 versehen, deren Durchmesser dem Außendurchmesser von Rohren 3 entspricht, die durch diese Öffnungen 2 hindurchgesteckt werden. Für einen besseren Halt weisen die Öffnungen 2 buchsenförmige Aufbördelungen 4 auf.

Diejenige Seitenfläche 5 der Lamelle 1, die in die Innenwandung 6 der Aufbördelung 4 übergeht, ist, wie auch die Innenwandung 6 mit einer Kunststoffschicht 7 belegt, die vorzugsweise ein Thermoplast ist. Die gleichmäßige Kunststoffbeschichtung 7 weist eine geringere Dicke auf als die des Lamellenbleches.

Die das flüssige Medium, insbesondere die Motorenkühlflüssigkeit enthaltenen Rohre 3 bestehen vorzugsweise aus demselben Kunststoff wie die Kunststoffschicht 7 und werden durch die Öffnungen 2 gesteckt. Damit liegt das Kunststoffmaterial der Außenseite der Rohre 3 an dem Kunststoffmaterial der Beschichtung 7 im Bereich der Innenwandung 6, so daß bei einer Erwärmung dieser Kunststoffschichten es zu einem Verschmelzen kommt, wenn Thermoplaste verwendet werden. Die Erwärmung hierfür kann auf verschiedenste Weise erfolgen, insbesondere durch einen Durchlaufofen oder durch das Füllen der Rohre mit Flüssigkeit, insbesondere Wasser, die durch Mikrowellenstrahlung erhitzt wird. Alternativ können aber auch die Kunststoffschichten miteinander verklebt werden.

In einer weiteren Alternative können die Rohre aus Metall, insbesondere Aluminium oder Kupfer bestehen und ihre Außenwand mit einer Kunststoffschicht versehen sein, die der Kunststoffschicht 7 der Lamellen vorzugsweise entspricht. In beiden Fällen führt eine genau dosierte Wärmezufuhr zu einer homogenen Verbindung der Kunststoffschichten.

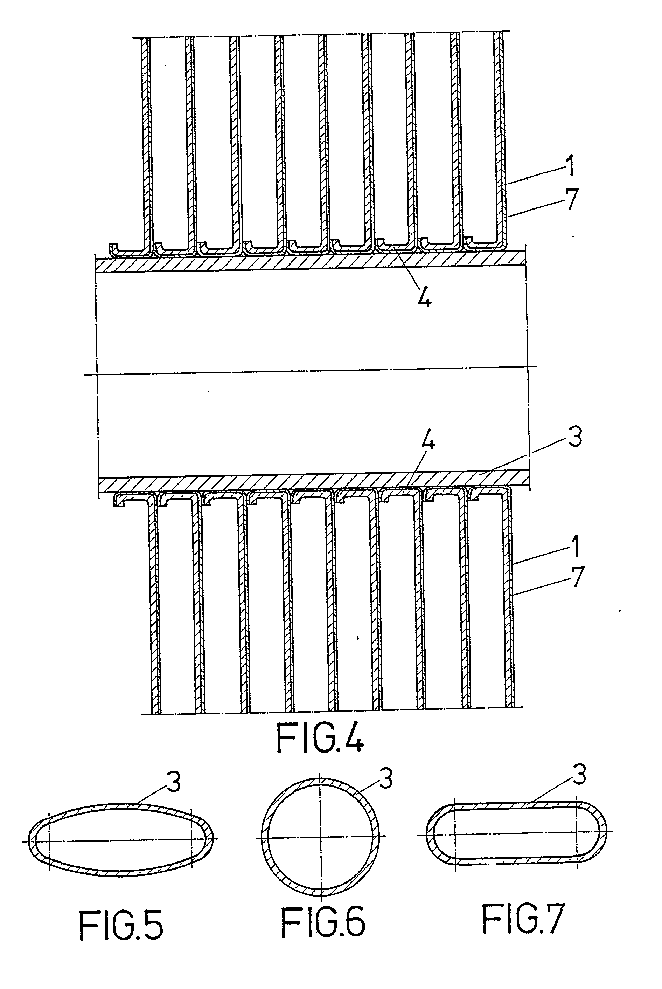

Rohre 3 und Öffnungen 2 können auch nicht runde Querschnitte aufweisen. So kann der Querschnitt oval (Figur 5) oder länglich (Figur 7) sein.

## Ansprüche

1. Element zum Übertragen von Wärme bei Wärmetauschern mit einem Rohr, an dessen Außenseite Rippen oder Lamellen aus Metall vorstehen, **dadurch gekennzeichnet,** daß die Rippen oder Lamellen (1) zumindest auf einer Seite mit Kunststoff (7) überzogen sind, und daß das Rohr (3) aus Kunststoff besteht oder außen eine Kunststoffbeschichtung trägt, und der Kunststoff (7) der Rippen oder Lamellen (1) mit dem des Rohres (3) verbunden ist.

2. Element nach Anspruch 1, **dadurch gekennzeichnet,** daß der Kunststoff (7) der Rippen oder Lamellen (1) mit dem des Rohres (3) verschmolzen oder verklebt ist.

3. Element nach Anspruch 1 oder 2, **dadurch gekennzeichnet,** daß die für die Rohre (3) vorgesehenen Öffnungen (2) der Rippen oder Lamellen (1) Umbördelungen (4) oder Stutzen - oder Buchsen als Erweiterungen der Ränder aufweisen, die auf der dem Rohr (3) zugewandten Seite die Kunststoffbeschichtung (7) tragen.

4. Verfahren zum Herstellen von Elementen nach einem der vorherigen Ansprüche 1 bis 3, **dadurch gekennzeichnet,** daß die Rippen oder Lamellen (1) und die Rohre (3) aufeinander gesteckt werden und darauf durch Zufuhr von Energie die Kunststoffbeschichtungen an ihren Berührungsstellen miteinander verbunden werden.

5. Verfahren nach Anspruch 4, **dadurch gekennzeichnet,** daß die Energie durch Mikrowellen oder einen Durchlaufofen zugeführt wird.

6. Verfahren nach Anspruch 5, **dadurch gekennzeichnet,** daß die Rohre (3) mit einer Flüssigkeit, insbesondere Wasser gefüllt und die Flüssigkeit durch Mikrowellen erhitzt wird.

FIG.1

FIG.2

FIG.3

FIG.4

FIG.5

FIG.6

FIG.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 068 254 (THE ENGLISH ELECTRIC CO. LTD)<br>* Seite 1, Zeile 76 - Seite 2, Zeile 23; Seite 2, Zeilen 43-52; Seite 2, Zeile 109 - Seite 3, Zeile 15; Figuren 1,2 *<br>--- | 1-5 | F 28 F 21/06<br>F 28 F 1/32<br>B 29 C 65/02 |
| Y | DE-A-3 419 248 (GRÜNWALD)<br>* Insgesamt *<br>--- | 6 | |
| X | FR-A- 962 422 (S.A. DES USINES CHAUSSON)<br>* Seite 2, Zeilen 6-12; Seite 4, Zeilen 35-39; Figur 2 *<br>--- | 1-3 | |
| A | DE-C- 716 702 (BOSCH GmbH)<br>* Seite 2, Zeilen 80-84,101-116; Figur *<br>--- | 1-5 | |
| A | DE-U-1 937 471 (SALMEN)<br>* Zusammenfassung *<br>--- | 1 | RECHERCHIERTE SACHGEBIETE (Int. Cl.4) |
| A | US-A-2 664 373 (REILLY)<br>* Spalte 1, Zeilen 27-55; Figur 3 *<br>----- | 1,4-6 | F 28 F<br>B 29 C<br>H 05 B |

Der vorliegende Recherchenbericht wurde für alle Patentansprüche erstellt

| Recherchenort | Abschlußdatum der Recherche | Prüfer |
|---|---|---|
| DEN HAAG | 31-07-1989 | BELTZUNG F.C. |

EPO FORM 1503 03.82 (P0403)